Europäisches Patentamt

European Patent Office

Office européen des brevets

(19)

(11) Veröffentlichungsnummer : **0 072 922 B1**

## EUROPÄISCHE PATENTSCHRIFT

(12)

(45) Veröffentlichungstag der Patentschrift :
04.07.84

(51) Int. Cl.³ : **C 09 D 3/58**, C 08 L 63/00,
C 09 D 5/40

(21) Anmeldenummer : 82106494.6

(22) Anmeldetag : 19.07.82

(54) **Bindemittelsystem für Überzugsmassen.**

(30) Priorität : 21.08.81 DE 3133104

(43) Veröffentlichungstag der Anmeldung :
02.03.83 Patentblatt 83/09

(45) Bekanntmachung des Hinweises auf die Patenterteilung : 04.07.84 Patentblatt 84/27

(84) Benannte Vertragsstaaten :
AT BE CH DE FR GB IT LI NL SE

(56) Entgegenhaltungen :
keine

(73) Patentinhaber : BASF Farben + Fasern Aktiengesellschaft
Am Neumarkt 30
D-2000 Hamburg 70 (DE)

(72) Erfinder : Eckardt, Felix-Joe
Am Klosterwald 27
D-4400 Münster (DE)
Erfinder : Heilmann, Ulrich, Dipl.-Chem. Dr.
Paul-Klee-Weg 7
D-4400 Münster (DE)
Erfinder : Behring, Elke
Im Stevertal 42
D-4710 Lüdinghausen (DE)

(74) Vertreter : Habbel, Hans-Georg, Dipl.-Ing.
Postfach 3429 Am Kanonengraben 11
D-4400 Münster (DE)

**Beschreibung**

Die Erfindung betrifft ein Bindemittelsystem für Überzugsmassen auf Basis eines carboxylhaltigen Reaktionsprodukts aus einer langkettigen natürlichen oder synthetischen ungesättigten Verbindung und einer ungesättigten Dicarbonsäure bzw. deren Anhydrid, ihre Verwendung und ein Verfahren zur Herstellung von Überzügen.

Carboxylgruppenhaltige Reaktionsprodukte der oben genannten Art, die auch als Addukte bezeichnet werden, sind als insbesondere wasserlösliche Bindemittel bekannt. Die Carboxylgruppen können beispielsweise durch Anlagerung von Maleinsäure, Maleinsäureanhydrid oder Fumarsäure an eine ungesättigte Fettsäure-Komponente eines Polyester- bzw. Alkydharzmoleküls in das Bindemittelmolekül eingeführt werden. Reaktionsprodukte aus Fettsäuren mit isolierten Doppelbindungen oder deren Triglyceriden sind beispielsweise in den US-PSen 2 188 882 und 2 262 923 beschrieben. Anstelle der natürlichen Öle werden häufig synthetische Rohstoffe eingesetzt, die einerseits fettsäureähnliche Kohlenstoffketten haben und andererseits über Doppelbindungen einer Adduktbildung zur Einführung von Carboxylgruppen zugänglich sind.

Vor allem niedermolekulare Homo- und Copolymerisate des Butadiens bieten aufgrund ihrer Struktur in der Kohlenstoffkette ähnliche Reaktionsmöglichkeiten wie die natürlichen trocknenden Öle. Derartige Reaktionsprodukte sind beispielsweise aus der DE-AS 1 815 014 und der DE-AS 2 511 675 bekannt.

Es wurde nun gefunden, daß man Überzugsmassen mit geringerer Krateneigung, verbessertem Verlauf, verbesserten Korrosionsschutzeigenschaften und im Falle ihrer Verwendung für das Elektrotauchlackierverfahren verbessertem Umgriff erhält, wenn diese Überzugsmassen als Bindemittel neben einem der beschriebenen Reaktionsprodukte einen speziellen Epoxidester enthalten. Es wurde außerdem gefunden, daß diese Elektrotauchbäder eine wesentlich verbesserte Badstabilität aufweisen.

Gegenstand der Erfindung ist also ein Bindemittelsystem der eingangs genannten Art, das dadurch gekennzeichnet ist, daß es die folgenden Komponenten enthält

(A) 50-95 Gew.-% des Reaktionsprodukts und

(B) 5-50 Gew.-% eines Epoxidesters, der erhalten worden ist durch Veresterung einer mindestens zwei Epoxidgruppen pro Molekül enthaltenden Epoxidverbindung mit einer Hydroxymonocarbonsäure, wobei die Summe der Komponenten A und B 100 % ergibt.

Als Komponente A sind Addukte von Polybutadien besonders geeignet.

Unter « Polybutadien » sind alle handelsüblichen Isomeren zu verstehen, sowohl die mit mittelständigen Cis- und Transdoppelbindungen als auch die mit Vinyldoppeloindungen. Geeignet sind beispielsweise Polybutadiene, die 65 bis 75 % 1,4-Cis-, 25 bis 35 % 1,4-Trans- und unter 1 % 1,2-Vinyl-Konfigurationen aufweisen. Weiterhin Polybutadiene, die ca. 10 % 1,4-Cis-, bis 45 % 1,4-Trans- und bis 45 % 1,2-Vinyl-Konfigurationen enthalten. Gleichfalls sind Butadienpolymere, die endständige Carboxylgruppen enthalten, anwendbar, wie sie in der Zeitschrift « Rubber and Plastics Age » 1964, Bd. 45, Nr. 11, auf Seite 1347, beschrieben werden.

Epoxidester, die durch Umsetzung einer zwei Epoxidgruppen pro Molekül enthaltenden Epoxidverbindung mit einer Alkansäure oder einer Hydroxyalkansäure erhalten wurden, sind an sich aus der DE-OS 2 700 537 bekannt. Eine Verwendung dieser Produkte in Kombination mit einem Reaktionsprodukt der oben genannten Art wird jedoch in dieser Literaturstelle nicht beschrieben. Es war daher überraschend, daß durch die erfindungsgemäße Kombination ein Bindemittelsystem erhalten werden konnte, das Überzugsmassen mit den genannten Vorteilen ergibt.

Vorteilhaft sind je nach gewünschter Reaktivität der Komponente A die Säuregruppen des carboxylgruppenhaltigen Reaktionsproduktes mindestens teilweise, z. B. bis zur Stufe des Halbesters, verestert. Als Veresterungskomponente sind z. B. Methanol, Ethanol, Butanol, i-Propanol, Ethylenglykolmonobutylether, Butylenglykolmonobutylether, Ethylenglykol u. dgl. geeignet.

Das Bindemittelsystem kann vorteilhaft als Komponente C zusätzlich 1 bis 20 Gew.-%, bezogen auf die Summe der Komponenten A und B, eines Phenol-Formaldehyd-Harzes z. B. auf der Basis von Butylphenol, enthalten.

Als Epoxidverbindung zur Herstellung der Komponente B kann grundsätzlich jede Epoxidverbindung eingesetzt werden, die mindestens 2 Epoxidgruppen pro Molekül enthält.

Eine besonders gut geeignete Klasse von Polyepoxiden sind die Polyglycidylether von Polyphenolen, wie z. B. von Bisphenol A. Man erhält diese z. B. durch Veretherung eines Polyphenols mit Epichlorhydrin oder Dichlorhydrin in Gegenwart von einem Alkali. Als phenolische Verbindung kommen bei solchen Polyepoxiden z. B. Bis(4-hydroxyphenyl)-2,2-propan, 4,4'-Dihydroxybenzophenol, Bis(4-hydroxyphenyl)-1,1-ethan, Bis(4-hydroxyphenyl)-1,1-isobutan, Bis(4-hydroxy-tert.-butylphenyl)-2,2-propan, Bis(2-hydroxynaphthyl) methan und 1,5-Dihydroxynaphthalin in Betracht. In manchen Fällen ist es vorteilhaft, Polyepoxide mit etwas höheren Molekulargewichten und aromatischen Gruppen zu verwenden. Man erhält sie, indem man den Diglycidylether mit einem Polyphenol, wie Bisphenol A, umsetzt und dieses Produkt dann weiter mit Epichlorhydrin zu einem Polyglycidylether umsetzt. Der Polyglycidylether von Polyphenolen enthält bevorzugt freie Hydroxylgruppen zusätzlich zu den Epoxidgruppen. Eine andere Gruppe von geeigneten Polyepoxiden erhält man aus Novolaken oder ähnlichen Polyphenolharzen.

Geeignete Polyepoxide sind ferner die durch Epoxidation von olefinisch ungesättigten alicyclischen Verbindungen erhaltenen Produkte. Zu diesen Produkten gehören Diepoxide, die zum Teil ein oder mehrere Monoepoxide enthalten. Diese Polyepoxide sind nicht-phenolisch und man erhält sie durch Epoxidation von alicyclischen Olefinen, z. B. mit Sauerstoff und bestimmten Metallkatalysatoren, mit Perbenzoesäure, mit Säure-Aldehydmonoperacetat oder mit Peressigsäure. Die aliphatischen Epoxidether und -ester sind gut bekannte Polyepoxide.

Andere Epoxide, die bei der Erfindung verwendet werden können, sind Acrylpolymerisate, die mindestens zwei Epoxidgruppen und Hydroxylgruppen enthalten. Bevorzugt erhält man diese Acrylpolymerisate, indem man ungesättigte epoxidhaltige Monomere, wie Glycidylacrylat oder -methacrylat, ein hydroxylhaltiges ungesättigtes Monomeres und mindestens ein anderes ungesättigtes Monomeres mischpolymerisiert.

Mit der ungesättigten Glycidylverbindung können beliebige polymerisierbare monomere Verbindungen mischpolymerisiert werden, die mindestens eine $CH_2 = C \mathop{=}$ Gruppe, bevorzugt in Endstellung haben. Beispiele derartiger Monomeren sind aromatische Verbindungen, wie Phenylverbindungen, z. B. Styrol, α-Methylstyrol, Vinyltoluol und dergl. Auch aliphatische Verbindungen, wie olefinisch ungesättigte Säuren und Ester, wie Acrylsäure, Methylacrylat, Ethylacrylat, Methylmethacrylat und dergl. können verwendet werden. Mit der ungesättigten Glycidylverbindung können auch Allylmelaminharze oder Allylphenolharze mischpolymerisiert werden.

Bei der Durchführung der Polymerisationsreaktion können gut bekannte Arbeitsweisen verwendet werden. Als Katalysator wird üblicherweise ein Peroxidkatalysator verwendet, doch können auch Diazoverbindungen oder Redoxkatalysatoren benutzt werden.

Besonders bevorzugt werden Epoxidverbindungen, die ein Reaktionsprodukt aus einem Diepoxid mit einem Epoxidäquivalentgewicht von 225 bis 900 und einer aliphatischen und oder aromatischen Dihydroxyverbindung oder einer Dicarbonsäure im Molverhältnis 2 : 0,8 bis 2 : 1,3 sind. Als Beispiele geeigneter Diole seien Ethylenglykol, Diethylenglykol, Triethylenglykol, 1,2-Propylenglykol, 1,4-Propylenglykol, Neopentylglykol, Hydroxypivalinsaureneopentylglykolester, 1,6-Hexandiol und 1,5-Pentandiol genannt. Auch cycloaliphatische und aromatische Dihydroxyverbindungen können eingesetzt werden. Beispiele hierfür sind 1,4-Dihydroxyclohexan, Hydrochinon und ähnliche Verbindungen. Geeignete Dicarbonsäuren sind beispielsweise Oxalsäure, Adipinsäure, Bernsteinsäure, Glutarsäure, Phthalsäure, Isophthalsäure, Terephthalsäure, Hexahydroterephthalsäure, Tetrahydrophthalsäure, 2,6-Naphthalindicarbonsäure oder dimerisierte Linolensäuren.

Als Hydroxymonocarbonsäure zur Herstellung der Komponente B sind beispielsweise Hydroxyessigsäure, Milchsäure, Hydroxyvaleriansäure, Hydroxycaprylsäure, 12-Hydroxystearinsäure, o-, m- und p-Hydroxybenzoesäure, 3,4,5-Trihydroxybenzoesäure, p-Hydroxyphenylessigsäure und o-Hydroxyzimtsäure geeignet. Als besonders vorteilhaft haben sich Dimethylolpropionsäure und Diphenolsäure erwiesen.

Die Komponenten A, B und gegebenenfalls C des Bindemittelsystems können bei Raumtemperatur, jedoch vorteilhaft bei Temperaturen von 60 bis 160 °C miteinander gemischt worden sein. Durch die Wahl der Temperatur und die Zeitdauer der Erhitzung können die Eigenschaften der Überzugsmassen beeinflußt werden. Bei erhöhten Temperaturen tritt eine partielle Vernetzung der Bindemittelkomponenten ein. Hierdurch kann ihre Verträglichkeit verbessert werden, und es ergibt sich bei der Anwendung der Überzugsmassen ein besserer Verlauf und eine höhere Oberflächengüte.

Das erfindungsgemäße Bindemittelsystem kann für lösungsmittelhaltige Überzugsmassen, d. h. z. B. für konventionelle Einbrennlacke, verwendet werden.

Die erhaltenen Überzugsmassen können durch Spritzen, Tauchen, Fluten, Walzen, Rakeln oder dergl. appliziert werden.

Das Bindemittelsystem ist auch für Überzugsmassen in Form wäßriger Lösungen und/oder Dispersionen geeignet. Besonders vorteilhaft kann das Bindemittelsystem in mindestens teilweise durch Basen neutralisierter Form für wäßrige Elektrotauchbäder verwendet werden. Die Elektrotauchbäder können die üblichen weiteren Bestandteile, wie z. B. Pigmente, Füllstoffe, organische Lösungsmittel, Katalysatoren, Verlaufhilfsmittel oder dergl. enthalten.

Die Erfindung betrifft auch ein Verfahren zur Herstellung von Überzügen auf einem elektrisch leitfähigen Substrat, durch Eintauchen des Substrats in eine Überzugsmasse, die ein Bindemittelsystem auf der Basis eines carboxylgruppenhaltigen Reaktionsprodukts aus einer langkettigen natürlichen oder synthetischen ungesättigten Verbindung und einer ungesättigten Dicarbonsäure bzw. deren Anhydrid enthält, elektrophoretisches Abscheiden eines Films auf dem als Anode geschalteten Substrat und anschließendes Einbrennen des Films, dadurch gekennzeichnet, daß das Bindemittelsystem die folgenden Komponenten enthält :

(A) 50 bis 95 Gew.-% des Reaktionsproduktes und

(B) 5 bis 50 Gew.-% eines Epoxidesters, der erhalten worden ist durch Veresterung einer mindestens zwei Epoxidgruppen pro Molekül enthaltenden Epoxidverbindung mit einer Hydroxymonocarbonsäure, wobei die Summe der Komponenten A und B 100 % ergibt.

Vorteilhaft sind die Säuregruppen des carboxylgruppenhaltigen Reaktionsprodukts, mindestens teilweise verestert.

Vorteilhaft enthält das Bindemittelsystem als Komponente C zusätzlich 1 bis 20 Gew.-%, bezogen auf die Summe der Komponenten A und B, eines Phenol-Formaldehyd-Harzes.

Vorteilhaft ist die mindestens zwei Epoxidgruppen pro Molekül enthaltene Epoxidverbindung ein Reaktionsprodukt aus einem Diepoxid mit einem Epoxidäquivalentgewicht von 225 bis 900 und einer aliphatischen und/oder aromatischen Dihydroxyverbindung oder einer Dicarbonsäure im Molverhältnis 2 : 0,8 bis 2 : 1,3.

Vorteilhaft sind als Hydroxymonocarbonsäure Dimethylolpropionsäure und/oder Diphenolsäure verwendet worden.

Vorteilhaft sind die Komponenten A, B und gegebenenfalls C bei Temperaturen von 60 bis 160 °C miteinander gemischt worden.

Im folgenden wird die Erfindung anhand von Beispielen näher erläutert.

## A. Herstellung eines Polybutadien-Maleinsäureaddukt-Halbesters (Komponente A)

Die Herstellung eines Polybutadien-Adduktes erfolgt nach der DE-AS 2 511 675. Hierzu wird ein Reaktionsgefäß verwendet, das mit Einfüllstutzen, Rührer, Rückflußkühler, Tropftrichter sowie mit einem Gaseinleitungsrohr und einer temperaturgesteuerten Heizvorrichtung ausgestattet ist.

Es werden 780 g flüssiges Polybutadien in den Reaktionsbehälter eingefüllt. Das Polybutadien ist ein handelsübliches Isomerengemisch, mit folgenden Kennzahlen : Gehalt an 1,2-Vinylisomeren 13 bis 21 Gew.-%, 1,4-Trans-Isomeren 31 bis 43 Gew.-%, 1,4-Cis-Isomeren 36 bis 48 Gew.-%, Molekulargewicht 1 000 bis 1 500, Jodzahl 350 bis 400. Als Stabilisator wird 0,4 g $H_3PO_3$ eingerührt. Das Gemisch wird unter Rühren sowie unter Stickstoffatmosphäre auf 120 °C erhitzt. Nach Erreichen dieser Temperatur wird der Reaktionsbehälter mit 220 g Maleinsäureanhydrid beschickt, die Temperatur auf 190 °C eingestellt und während etwa 4 bis 5 Stunden unter ständigem Rühren beibehalten.

Das erhaltene Produkt wird durch Umsetzung mit Methanol in den entsprechenden Halbester überführt. Hierzu werden 72 g Methanol und 8,8 g Triethylamin als Katalysator zu dem obigen Ansatz gegeben. Diese Mischung wird 3 Stunden bei einer Temperatur von 130 °C gehalten. Anschließend wird der Überschuß an Methanol im Vakuum abgezogen.

### B1. Herstellung eines Epoxidesters

In einem mit einem Thermometer, einem Rührer, einem Wasserabscheider, einer Einleitungsvorrichtung für Inertgas und einem Heizmantel versehenen Kolben werden 1 800 g eines Polyglycidylethers des 2,2-bis(4-Hydroxyphenyl)-Propan mit einem Epoxidäquivalentgewicht von 431 in 360 g Toluol unter Erwärmen auf 140 °C gelöst. Die Temperatur der Lösung wird auf ca. 100 °C abgesenkt. Nacheinander werden 4,5 g Benzyldimethylamin als Katalysator, 146 g Adipinsäure und 572 g Diphenolsäure zugegeben. Die Temperatur wird erneut auf 140 °C angehoben, und die Veresterung der Carboxylgruppen wird durchgeführt, bis das Produkt eine Säurezahl von 3 bis 6 mg KOH/g und eine Hydroxylzahl von 250-270 hat. Das durch die Veresterung entstehende Wasser wird während der Reaktion durch azeotrope Destillation entfernt. Nach Beendigung der Reaktion wird Vakuum angelegt und das Toluol abdestilliert.

### B2. Herstellung eines weiteren Epoxidesters

In einem mit einem Termometer, einem Rührer, einem Wasserabscheider, einer Einleitungsvorrichtung für Inertgas und einem Doppelmantel versehenen Kolben werden 1 800 g eines Polyglycidylethers von 2,2-bis-(4-Hydroxyphenyl)-Propan mit einem Epoxidäquivalentgewicht von 431 in 450 g Xylol gelöst. Nach vollständiger Auflösung werden 260 g Neopentylglykol zugegeben. Nachdem eine homogene Mischung entstanden ist, werden 29 g Dimethylbenzylamin zugegeben. Die Temperatur wird schnell auf 132 °C angehoben. Nachdem ein Epoxidäquivalentgewicht von 1 460 erreicht ist, werden 572 g Diphenolsäure zugegeben. Bei 135 bis 140 °C wird die Veresterungsreaktion durchgeführt bis eine weitgehende Veresterung der Carboxylgruppen erfolgt ist. Das entstehende Produkt hat eine Säurezahl von 3 bis 6 mg KOH/g und eine Hydroxylzahl von 200 bis 270.

Das durch Nebenreaktion entstehende Wasser wird während der Reaktion durch azeotrope Destillation entfernt. Nach Beendigung der Reaktion wird Vakuum angelegt und unter steigendem Unterdruck wird das enthaltene Lösungsmittel abdestilliert.

## Beispiel 1 bis 5 : Pigmentierte Elektrotauchlacke

Es werden pigmentierte Elektrotauchlacke auf Basis des Polybutadien-Maleinsäureaddukt-Halbesters A und des Epoxidesters B 1 hergestellt. Hierzu werden diese Komponenten zunächst gemischt und zusammen mit einem Lösungsmittelgemisch aus Diacetonalkohol, Ethylenglykol, Ethanol und Isopropanol und gegebenenfalls zusammen mit einem Phenol-Formaldehyd-Harz unter Rührer 3 Stunden lang auf 90 °C erhitzt. Aus der erhaltenen Lösung werden unter Zusatz von Titandioxid (Rutil-Typ), Extender und

4

Ruß durch Dispergieren auf einer Dreiwalze Pigmentpasten hergestellt.

Das Phenol-Formaldehyd-Harz ist ein handelsübliches, ölreaktives tert-Butylphenol-Formaldehyd-Harz. Als Extender wird ein handelsübliches Aluminiumsilikat vom Kaolintyp mit einem Gehalt von 39 Gew.-% $Al_2O_3$ und 45 Gew.-% $SiO_2$ verwendet. Die für die Vergleichsbeispiele dienenden Pigmentpasten enthalten keinen Epoxidester.

Die Pigmentpasten werden mit Triethylamin neutralisiert und mit vollentsalztem Wasser zu gebrauchsfertigen Elektrotauchlacken verarbeitet. Die Zusammensetzung der Elektrotauchlacke sowie der pH-Wert, die Leitfähigkeit und der Festkörpergehalt sind in der Tabelle 1 wiedergegeben.

Die Mengenangaben in dieser und den folgenden Tabellen stellen Gewichtsteile dar, soweit nicht ausdrücklich etwas anderes angegeben ist.

Tabelle 1 : Elektrotauchlacke 1 bis 5

| | Beispiel 1 (Vergleichs-beispiel) | Beispiel 2 (Vergleichs-beispiel) | Beispiel 3 | Beispiel 4 | Beispiel 5 |
|---|---|---|---|---|---|
| Addukt-Halbester A | 60,0 | 54,0 | 54,0 | 48,0 | 42,0 |
| Epoxidester B 1 | — | — | 6,0 | 12,0 | 12,0 |
| Phenol-Formaldehyd-Harz | — | 6,0 | — | — | 6,0 |
| Diacetonalkohol | 4,6 | 4,6 | 4,6 | 4,6 | 4,6 |
| Ethylglykol | 8,2 | 8,2 | 8,2 | 8,2 | 8,2 |
| Ethanol | 8,2 | 8,2 | 8,2 | 8,2 | 8,2 |
| Isopropanol | 2,3 | 2,3 | 2,3 | 2,3 | 2,3 |
| Titandioxid | 6,1 | 6,1 | 6,1 | 6,1 | 6,1 |
| Extender | 5,2 | 5,2 | 5,2 | 5,2 | 5,2 |
| Ruß | 0,6 | 0,6 | 0,6 | 0,6 | 0,6 |
| Triethylamin | 4,8 | 4,8 | 4,8 | 4,8 | 4,8 |
| Wasser | 376,2 | 376,2 | 376,2 | 376,2 | 376,2 |
| Festkörpergehalt nach 30 Min./180 °C (Gew.-%) | 15 | 15 | 15 | 15 | 15 |
| pH-Wert bei 20 °C | 7,45 | 7,71 | 7,62 | 7,6 | 7,92 |
| Leitfähigkeit bei 20 °C (mS/cm) | 1,68 | 1,32 | 1,43 | 1,25 | 1,22 |

Die Elektrotauchlacke werden auf phosphatierte Stahlbleche bei einer Spannung von 200 bis 300 V und einer Badtemperatur von 25 °C 120 Sekunden lang abgeschieden. Der abgeschiedene Film wird mit vollentsalztem Wasser gespült, mit Luft abgeblasen und bei 180 °C 30 Minuten lang eingebrannt. Es werden die Schichtdicke des eingebrannten Films, der Verlauf und der Korrosionsschutz bestimmt. Ferner wird die Badstabilität beurteilt. Die Prüfungsergebnisse sind in Tabelle 2 wiedergegeben. Die Prüfverfahren sind im Zusammenhang mit dieser Tabelle angegeben.

Tabelle 2 : Abscheidung der Elektrotauchlacke 1 bis 5 und Prüfung

| | Beispiel 1 (Vergleichs-beispiel) | Beispiel 2 (Vergleichs-beispiel) | Beispiel 3 | Beispiel 4 | Beispiel 5 |
|---|---|---|---|---|---|
| SD$_{200}$ (μm) | 17 | 21 | 16 | 17 | 16 |
| SD$_{300}$ (μm) | 24 | 32 | 22 | 22 | 19 |
| Badstabilität | 60 h | 60 h | 240 h | 240 h | 240 h |
| DIN 50 021 (480 h) | 2,5/2 | 1,5/1 | 1,5/2 | 1/1 | 1/1 |

SD$_{200}$ : Schichtdicke des eingebrannten Films, Abscheidespannung von 200 V, Abscheidezeit 120 s.

SD$_{300}$ : Schichtdicke des eingebrannten Films bei einer Abscheidespannung von 300 V, Abscheidezeit 120 s.

Badstabilität : Die Elektrotauchlacke werden einer konstanten Wärmebelastung bei 30 °C ausgesetzt. Die Badstabilität wird anhand von Sedimentationen und Abscheideergebnissen beurteilt.

DIN 50 021 : Als Korrosionsschutzprüfung wird eine Salzsprühnebelprüfung nach DIN 50 021 durchgeführt. Die Prüfdauer beträgt 480 Stunden. In der Tabelle ist die Unterwanderung des Lackfilms in mm an einem vor Prüfung angebrachten Ritz in dem Lackfilm angegeben. Die Auswertung erfolgt nach DIN 53 167.

5

**0 072 922**

Die Unterwanderung wird durch Abschaben des losen Lackfilms festgestellt. In der Tabelle gibt der erste Wert das Ergebnis bei noch feuchtem Lackfilm unmittelbar nach Durchführung der Salzsprühnebelprüfung wieder. Der zweite Wert ergibt sich nach Lagerung und vollständiger Trocknung der Prüfbleche.

Die Elektrotauchlacke 3 bis 5 zeigen gegenüber den Vergleichsbeispielen einen besseren Umgriff, und die abgeschiedenen Filme weisen einen besseren Verlauf auf.

Beispiel 6 bis 10 : Unpigmentierte Elektrotauchlacke

In gleicher Weise wie in den Beispielen 1 bis 5 werden auf der Basis des Polybutadien-Maleinsäureaddukt-Halbesters A und des Epoxidesters B 2 unpigmentierte Elektrotauchlacke hergestellt. Die Zusammensetzung dieser Lacke ist in der Tabelle 3 wiedergegeben.

Tabelle 3 : Elektrotauchlacke 5 bis 10

| | Beispiel 6 (Vergleichs-beispiel) | Beispiel 7 (Vergleichs-beispiel) | Beispiel 8 | Beispiel 9 | Beispiel 10 |
|---|---|---|---|---|---|
| Addukt-Halbester A | 70 | 63 | 63 | 56 | 49 |
| Epoxidester B 2 | — | — | 7,0 | 14 | 14 |
| Phenol-Formaldehyd-Harz | — | 7 | — | — | 7,0 |
| Diacetonalkohol | 6 | 6 | 6,0 | 6 | 6 |
| Ethylglykol | 10,5 | 10,5 | 10,5 | 10,5 | 10,5 |
| Ethanol | 10,5 | 10,5 | 10,5 | 10,5 | 10,5 |
| Isopropanol | 3,0 | 3,0 | 3,0 | 3,0 | 3,0 |
| Triethylamin | 5,5 | 5,6 | 4,8 | 4,4 | 4,5 |
| Wasser | 361,1 | 361,0 | 361,8 | 362,2 | 362,1 |
| Festkörpergehalt nach 30 Min. bei 180 °C (Gew.-%) | 15,0 | 15,0 | 15,0 | 15,0 | 15,0 |
| pH-Wert bei 20 °C | 7,35 | 7,74 | 7,38 | 7,53 | 7,72 |
| Leitfähigkeit bei 20 °C (mS/cm) | 1,65 | 1,63 | 1,40 | 1,31 | 1,28 |

Die unpigmentierten Elektrotauchlacke 6 bis 10 werden unter den gleichen Bedingungen wie in den Beispielen 1 bis 5 abgeschieden und eingebrannt. Es ergaben sich ebenfalls festhaftende Überzüge mit guten Korrosionsschutzeigenschaften.

Beispiel 11 bis 15 : Lösungsmittelhaltige Einbrennlacke für konventionelle Applikation

Zur Herstellung von lösungsmittelhaltigen Einbrennlacken für konventionelle Applikation werden der Polybutadienmaleinsäureaddukt-Halbester A, der Epoxidester B 1 und gegebenenfalls ein Phenol-Formaldehyd-Harz in einem Lösungsmittelgemisch aus Diacetonalkohol, Ethylglykol, Ethanol und Isopropanol gelöst und unter Rühren 3 Stunden lang auf 90 °C unter Rückfluß erhitzt. Die erhaltene Lösung wird nach dem Erkalten mit Butylacetat auf eine dem jeweiligen Applikationsverfahren angepaßte Viskosität verdünnt.

Die Zusammensetzung der Einbrennlacke ist in Tabelle 4 wiedergegeben.

Tabelle 4 : Einbrennlacke für konventionelle Applikation

| | Beispiel 11 (Vergleichs-beispiel) | Beispiel 12 (Vergleichs-beispiel) | Beispiel 13 | Beispiel 14 | Beispiel 15 |
|---|---|---|---|---|---|
| Addukt-Halbester A | 70 | 63 | 63 | 56 | 49 |
| Epoxidester B 1 | — | — | 7 | 14 | 14 |
| Phenol-Formaldehyd-Harz | — | 7 | — | — | 7 |
| Diacetonalkohol | 6 | 6 | 6 | 6 | 6 |
| Ethylglykol | 10,5 | 10,5 | 10,5 | 10,5 | 10,5 |
| Ethanol | 10,5 | 10,5 | 10,5 | 10,5 | 10,5 |
| Isopropanol | 3 | 3 | 3 | 3 | 3 |
| Butylacetat | 33,3 | 33,3 | 33,3 | 33,3 | 33,3 |
| Festkörpergehalt (Gew.-%) | 52,5 | 52,5 | 52,5 | 52,5 | 52,5 |
| Auslaufzeit in DIN-Becher 4 (S) | 95 | 98 | 100 | 96 | 105 |

6

**0 072 922**

Die Einbrennlacke werden auf phosphatierte Stahlbleche aufgerakelt und bei 180 °C 30 Minuten lang eingebrannt. Es ergeben sich festhaftende Überzüge mit einer Schichtdicke von 28 bis 32 μm. Die Lacke der Beispiele 13 bis 14 ergeben gegenüber den Vergleichsbeispielen 11 und 12 verbesserte Werte der Tiefung nach Erichsen (DIN 53 156) und eine höhere Pendelhärte nach König (DIN 53 157).

Beispiele 16 bis 20 : Unpigmentierte Dispersionen für das Elektrotauchlackierverfahren

Aus dem Polybutadienmaleinsäureaddukt-Halbester A, dem Epoxidester B 1, gegebenenfalls Phenol-Formaldehyd-Harz, Triethylamin und Wasser werden durch Rühren Dispersionen hergestellt. Diese werden 3 Stunden lang unter Rühren und Rückfluß auf 90 °C erhitzt. Anschließend wird mit weiterem Wasser auf einen Festkörpergehalt von 15 Gew.-% verdünnt.

Die Zusammensetzung der Dispersionen ist in Tabelle 5 wiedergegeben.

Tabelle 5 : Dispersionen für das Elektrotauchlackierverfahren

| | Beispiel 16 (Vergleichs- beispiel) | Beispiel 17 (Vergleichs- beispiel) | Beispiel 18 | Beispiel 19 | Beispiel 20 |
|---|---|---|---|---|---|
| Addukt-Halbester A | 40 | 36 | 24 | 28 | 26 |
| Epoxidester B 1 | — | — | 16 | 8 | 12 |
| Phenol-Formaldehyd-Harz | — | 4 | — | 4 | 2 |
| Triethylamin | 2,6 | 2,6 | 1,6 | 2,5 | 2,1 |
| Wasser | 57,4 | 57,4 | 58,4 | 57,5 | 57,9 |
| | + 166,7 | + 166,7 | + 166,7 | + 166,7 | + 166,7 |
| Festkörpergehalt nach 30 Min. bei 180 °C (Gew.-%) | 15,0 | 15,0 | 15,0 | 15,0 | 15,0 |
| pH-Wert bei 20 °C | 6,74 | 6,88 | 7,53 | 7,47 | 7,40 |
| Leitfähigkeit bei 20 °C (mS/cm) | 1,20 | 0,85 | 1,03 | 1,13 | 0,88 |

Die Dispersionen werden bei einer Spannung von 250 bis 350 V auf phosphatierte Stahlbleche abgeschieden und bei 180 °C 30 Minuten lang eingebrannt. Es ergeben sich Überzüge, die einen guten Korrosionsschutz bieten.

**Ansprüche**

1. Bindemittelsystem für Überzugsmassen auf der Basis eines carboxylgruppenhaltigen Reaktionsprodukts aus einer langkettigen natürlichen oder synthetischen ungesättigten Verbindung und einer ungesättigten Dicarbonsäure bzw. deren Anhydrid, dadurch gekennzeichnet, daß es durch Mischung der folgenden Komponenten erhalten worden ist :

(A) 50 bis 95 Gew.-% des Reaktionsprodukts und
(B) bis 50 Gew.-% eines Epoxidesters, der erhalten worden ist durch Veresterung einer mindestens 2 Epoxidgruppen pro Molekül enthaltenden Epoxidverbindung mit einer Hydroxymonocarbonsäure, wobei die Summe der Komponenten A und B 100 % ergibt.

2. Bindemittelsystem nach Anspruch 1, dadurch gekennzeichnet, daß die Säuregruppen des carboxylgruppenhaltigen Reaktionsprodukts mindestens teilweise verestert sind.

3. Bindemittelsystem nach Anspruch 1 oder 2, dadurch gekennzeichnet, daß es als Komponente C zusätzlich 1 bis 20 Gew.-%, bezogen auf die Summe der Komponenten A und B, eines Phenol-Formaldehyd-Harzes enthält.

4. Bindemittelsystem nach Anspruch 1 bis 3, dadurch gekennzeichnet, daß die mindestens 2 Epoxidgruppen pro Molekül enthaltende Epoxidverbindung ein Reaktionsprodukt aus einem Diepoxid mit einem Epoxidäquivalentgewicht von 225 bis 900 und einer aliphatischen und/oder aromatischen Dihydroxyverbindung oder einer Dicarbonsäure im Molverhältnis 2 : 0,8 bis 2 : 1,3 ist.

5. Bindemittelsystem nach Anspruch 1 bis 4, dadurch gekennzeichnet, daß als Hydroxymonocarbonsäure Dimethylolpropionsäure und/oder Diphenolsäure verwendet worden sind.

6. Bindemittelsystem nach Anspruch 1 bis 5, dadurch gekennzeichnet, daß die Komponenten A, B und gegebenenfalls C bei Temperaturen von 60 bis 160 °C miteinander gemischt worden sind.

7. Verwendung des Bindemittelsystems nach Anspruch 1 bis 6 für lösungsmittelhaltige Überzugsmassen.

8. Verwendung des Bindemittelsystems nach Anspruch 1 bis 6 für Überzugsmassen in Form wässriger Lösungen und/oder Dispersionen.

7

9. Verwendung des Bindemittelsystem in mindestens teilweise durch Basen neutralisierter Form für wässrige Elektrotauchbäder.

10. Verfahren zur Herstellung von Überzügen auf einem elektrisch leitfähigen Substrat durch Eintauchen des Substrats in eine Überzugsmasse, die ein Bindemittelsystem auf der Basis eines carboxylgruppenhaltigen Reaktionsprodukts aus einer langkettigen natürlichen oder synthetischen ungesättigten Verbindung und einer ungesättigten Dicarbonsäure bzw. deren Anhydrid enthält, elektrophoretisches Abscheiden eines Films, auf dem als Anode geschalteten Substrat und anschließendes Einbrennen des Films, dadurch gekennzeichnet, daß das Bindemittelsystem die folgenden Komponenten enthält :

(A) 50 bis 95 Gew.-% des Reaktionsproduktes und
(B) 5 bis 50 Gew.-% eines Epoxidesters, der erhalten worden ist durch Veresterung einer mindestens zwei Epoxidgruppen pro Molekül enthaltenden Epoxidverbindung mit einer Hydroxymonocarbonsäure, wobei die Summe der Komponenten A und B 100 % ergibt.

11. Verfahren nach Anspruch 10, dadurch gekennzeichnet, daß die Säuregruppen des carboxylgruppenhaltigen Reaktionsprodukts mindestens teilweise verestert sind.

12. Verfahren nach Anspruch 10 oder 11, dadurch gekennzeichnet, daß das Bindemittelsystem als Komponente C zusätzlich 1 bis 20 Gew.-%, bezogen auf die Summe der Komponenten A und B, eines Phenol-Formaldehyd-Harzes enthält.

13. Verfahren nach Anspruch 10 bis 12, dadurch gekennzeichnet, daß die mindestens zwei Epoxidgruppen pro Molekül enthaltende Epoxidverbindung ein Reaktionsprodukt aus einem Diepoxid mit einem Epoxidäquivalentgewicht von 225 bis 900 und einer aliphatischen und/oder aromatischen Dihydroxyverbindung oder einer Dicarbonsäure im Molverhältnis 2 : 0,8 bis 2 : 1,3 ist.

14. Verfahren nach Anspruch 10 bis 13, dadurch gekennzeichnet, daß als Hydroxymonocarbonsäure Dimethylolpropionsaure und/oder Diphenolsäure verwendet worden sind.

15. Verfahren nach Anspruch 10 bis 14, dadurch gekennzeichnet, daß die Komponenten A, B und gegebenenfalls C bei Temperaturen von 60 bis 160 °C miteinander gemischt worden sind.

**Claims**

1. A binder system for coating compositions which is based on a carboxyl-containing reaction product of a longchain natural or synthetic unsaturated compound and an unsaturated dicarboxylic acid or the anhydride thereof, characterised in that it has been obtained by mixing the following·components :

(A) 50 to 95 % by weight of the reaction product and
(B) 5 to 50 % by weight of an epoxide ester obtained by esterification of an epoxide compound which contains at least two epoxide groups per molecule with a hydroxymonocarboxylic acid, the total amount of components A and B being 100 %.

2. A binder system according to claim 1, characterised in that the acid groups of the carboxyl-containing reaction product are at least partially esterified.

3. A binder system according to claim 1 or 2, characterised in that an additional amount of 1 to 20 % by weight, relative to the total amount of components A and B, of a phenol/formaldehyde resin is present as component C.

4. A binder system according to claims 1 to 3, characterised in that the epoxide compound containing at least two epoxide groups per molecule is a reaction product of a diepoxide having an epoxide equivalent weight of 225 to 900 and an aliphatic and/or aromatic dihydroxy compound or a dicarboxylic acid in a molar ratio of 2 : 0.8 to 2 : 1.3.

5. A binder system according to claims 1 to 4, characterised in that dimethylolpropionic acid and/or diphenolic acid have been used as the hydroxymonocarboxylic acid.

6. A binder system according to claims 1 to 5, characterised in that components A, B and, if present, C have been mixed with one another at temperatures of 60 to 160 °C.

7. The use of the binder system according to claims 1 to 6, for solvent-containing coating compositions.

8. The use of the binder system according to claims 1 to 6, for coating compositions in the form of aqueous solutions and/or dispersions.

9. The use of the binder system in at least partially base-neutralised form for aqueous electrocoating baths.

10. A process for preparing coatings on an electrically conductive substrate by dipping the substrate into a coating composition which contains a binder system based on a carboxyl-containing reaction product of a long-chain natural or synthetic unsaturated compound and an unsaturated dicarboxylic acid or the anhydride thereof, electrophoretic deposition of a film onto the substrate connected as the anode and subsequent baking of the film, characterised in that the binder system contains the following components :

**0 072 922**

(A) 50 to 95 % by weight of the reaction product and

(B) 5 to 50 % by weight of an epoxide ester obtained by esterification of an epoxide compound containing at least two epoxide groups per molecule with a hydroxymonocarboxylic acid, the total amount of components A and B being 100 %.

11. A process according to claim 10, characterised in that the acid groups of the carboxyl-containing reaction product are at least partially esterified.

12. A process according to claim 10 or 11, characterised in that the binder system contains as component C an additional amount of 1 to 20 % by weight, relative to the total amount of components A and B, of a phenol/formaldehyde resin.

13. A process according to claims 10 to 12, characterised in that the epoxide compound containing at least two epoxide groups per molecule is a reaction product of a diepoxide having an epoxide equivalent weight of 225 to 900 and an aliphatic and/or aromatic dihydroxy compound or a dicarboxylic acid in a molar ratio of 2 : 0.8 to 2 : 1.3.

14. A process according to claims 10 to 13, characterised in that dimethylolpropionic acid and/or diphenolic acid have been used as the hydroxymonocarboxylic acid.

15. A process according to claims 10 to 14, characterised in that components A, B and, if present, C have been mixed with one another at temperatures of 60 to 160 °C.

## Revendications

1. Système liant pour matières de revêtement à base d'un produit, contenant des groupements carboxyles, de la réaction d'un composé insaturé à longue chaîne, naturel ou synthétique, et d'un acide dicarboxylique insaturé ou de son anhydride, caractérisé en ce qu'il a été obtenu en mélangeant les constituants suivants :

(A) 50 à 95 % en poids du produit de réaction, et

(B) 5 à 50 % en poids d'un ester époxydique obtenu par estérification d'un composé époxydique contenant au moins deux groupements époxydes par molécule, avec un acide hydroxymonocarboxylique, la somme des constituants A et B étant de 100 %.

2. Système liant selon la revendication 1, caractérisé en ce que les groupes acides du produit de réaction contenant des groupements carboxyles sont au moins partiellement estérifiés.

3. Système liant selon l'une quelconque des revendications 1 ou 2, caractérisé en ce qu'il contient en outre, en tant que constituant C, 1 à 20 % en poids, sur la base de la somme des constituants A et B, d'une résine de phénol-formaldéhyde.

4. Système liant selon l'une quelconque des revendications 1 à 3, caractérisé en ce que le composé époxydique contenant au moins deux groupements époxydes par molécule est un produit de la réaction d'un diépoxyde, ayant une masse équivalente d'époxyde de 225 à 900, et d'un composé dihydroxylé aliphatique et/ou aromatique ou d'un acide dicarboxylique, selon un rapport molaire compris entre 2 : 0,8 et 2 : 1,3.

5. Système liant selon l'une quelconque des revendications 1 à 4, caractérisé en ce que l'on a utilisé en tant qu'acide hydroxymonocarboxylique de l'acide diméthylolpropionique et/ou de l'acide diphénolique.

6. Système liant selon l'une quelconque des revendications 1 à 5, caractérisé en ce que les constituants A et B et éventuellement C ont été mélangés les uns aux autres à des températures de 60 à 160 °C.

7. Utilisation du système liant selon l'une quelconque des revendications 1 à 6, pour matières de revêtement contenant des solvants.

8. Utilisation du système liant selon l'une quelconque des revendications 1 à 6, pour matières de revêtement sous forme de solutions et/ou de dispersions aqueuses.

9. Utilisation du système liant pour des bains aqueux d'électrodéposition, sous une forme au moins partiellement neutralisée par des bases.

10. Procédé de préparation de revêtements sur un subjectile électroconducteur, par immersion du subjectile dans une matière de revêtement, qui contient un système liant à base d'un produit, contenant des groupements carboxyles, de la réaction d'un composé insaturé à longue chaîne, naturel ou synthétique, et d'un acide dicarboxylique insaturé ou de son anhydride, déposition électrophorétique d'un film, sur le subjectile monté en anode, puis cuisson du film, caractérisé en ce que le système liant contient les constituants suivants :

(A) 50 à 95 % en poids du produit de réaction et,

(B) 5 à 50 % en poids d'un ester époxydique, obtenu par estérification d'un composé époxydique contenant au moins deux groupements époxydes par molécule, avec un acide hydroxymonocarboxylique, la somme des constituants A et B étant de 100 %.

9

11. Procédé selon la revendication 10, caractérisé en ce que les groupements acides du produit de réaction contenant des groupements carboxyles sont au moins partiellement estérifiés.

12. Procédé selon l'une quelconque des revendications 10 ou 11, caractérisé en ce que le liant contient en outre en tant que constituant C 1 à 20 % en poids, sur la base de la somme des constituants A et B, d'une résine de phénolformaldéhyde.

13. Procédé selon l'une quelconque des revendications 10 à 12, caractérisé en ce que le composé époxydique contenant au moins deux groupements époxydes par molécule est un produit de la réaction d'un diépoxyde, ayant une masse équivalente d'époxyde de 225 à 900, et d'un composé dihydroxylé aliphatique et/ou aromatique ou d'un acide dicarboxylique, selon un rapport molaire compris entre 2 : 0,8 et 2 : 1,3.

14. Procédé selon l'une quelconque des revendications 10 à 13, caractérisé en ce que l'on a utilisé en tant qu'acide hydroxymonocarboxylique l'acide diméthylolpropionique et/ou l'acide diphénolique.

15. Procédé selon l'une quelconque des revendications 10 à 14, caractérisé en ce que les constituants A, B et éventuellement C ont été mélangés les uns aux autres à des températures de 60 à 160 °C.